## Europäisches Patentamt
## European Patent Office
## Office européen des brevets

(11) Publication number: **0 114 915**
**B1**

(12) **EUROPEAN PATENT SPECIFICATION**

(45) Date of publication of patent specification: **01.07.87**

(51) Int. Cl.⁴: **B 23 Q 35/10, B 23 Q 35/28**

(21) Application number: **83102900.4**

(22) Date of filing: **23.03.83**

(54) Cutting machine for helical scan of lower cylinder for rotary head video tape player.

(30) Priority: **01.02.83 JP 13794/83**

(43) Date of publication of application:
**08.08.84 Bulletin 84/32**

(45) Publication of the grant of the patent:
**01.07.87 Bulletin 87/27**

(84) Designated Contracting States:
**AT CH DE FR GB IT LI NL**

(56) References cited:
**EP-A-0 065 993**
**DE-A-2 030 301**
**DE-B-1 152 871**
**DE-C- 120 541**
**JP-A-50 145 986**
**JP-A-58 004 341**

(73) Proprietor: **Ohta, Isao**
**11-29, Takaido Higashi 4-chome**
**Suginami-ku Tokyo (JP)**

(72) Inventor: **Ohta, Isao**
**11-29, Takaido Higashi 4-chome**
**Suginami-ku Tokyo (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath Maximilianstrasse 58 D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a cutting machine according to the preamble of claim 1. Such cutting machine is known from JP—A—50-145 986.

The known cutting machine comprises a chuck for holding the workpiece mounted on an end of a main spindle supported rotatably on a headstock on a bed. A first cam plate is mounted on the head spindle at the adverse end of the main spindle, and a second cam plate is mounted on a separate shaft which is operatively coupled to the main spindle by gear means. A first cutting tool is mounted on cutting tool support means operatively connected to a cam follower engagable with said first cam plate. A second tool is mounted on a second tool support means engaging said second cam plate. A clutch means is provided in the shaft driving said second cam plate.

Thus, the first cam plate is arranged within the housing of the lathe so that removal of the cam plate is rather difficult. Furthermore, motion from the first cam plate to the first tool is transmitted through a lengthy, complicated mechanism, which will inevitably cause inaccuracy of cutting operation. The second cam plate is driven via gear means and a clutch so that the structure is bulky and costly. Additionally, respective control means must be provided to prevent both cutting tools from being active at one time.

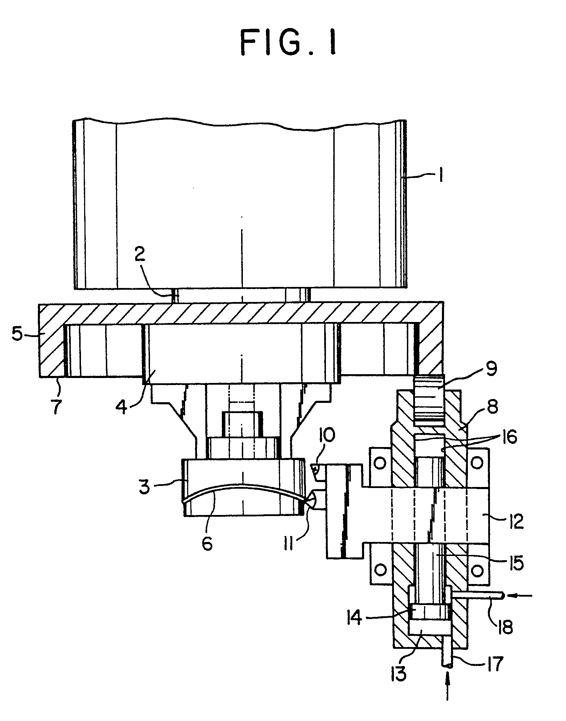

From JP—A—58-4341, a cutting machine for helical scan of a lower cylinder for a rotary head video tape player as disclosed in Fig. 1 of the accompanying drawings is known. In this machine, a chuck 4 for holding a lower cylinder 3 and a ⌐-shaped cam plate 5 are fixed concentrically on an end of a main spindle 2 supported on a headstock 1 on a lathe bed (not illustrated). A guide cam face 7 having a curved surface similar to a helical scan 6 formed on the outer surface of the lower cylinder is formed on the top of a peripheral raise of the cam plate 5.

On the other hand, a cutting tool support 8 supported on a tool rest (not illustrated) installed on a carriage on the bed having a feed means orthogonal to a main spindle has a means (not illustrated) shakable in a generating line direction of the lower cylinder 3 held on the chuck 4 and also energized in the direction of being pressed onto the cam face 7. Therefore, a cam roller 9 borne on the cutting tool support 8 is pressed onto the cam face 7 at all times and has the cutting tool support 8 shake in reciprocation in the generating line direction of the lower cylinder 3 following the cam face.

Then, a means to feed a cutting tool mount 12 on which a lead cutting tool 10 and a lead outer surface cutting tool 11 are installed in the generating line direction of the held lower cylinder 3, i.e., the direction in which the cutting tool support 8 shakes in reciprocation is provided on the cutting tool support 8.

Namely, a pressure oil chamber 13 is provided in the cutting tool support 8, a hydraulic piston 14 is fitted in the chamber 13 to form a reciprocation guide face 16 for a rod 15 of the piston 14, the cutting tool mount 12 is fixed on the rod 15, a tool feeding pressure oil supply/exhaust port 17 to actuate the piston 14 and a tool return pressure oil supply/exhaust port 18 are provided in the pressure oil chamber 13, and these supply/exhaust ports 17 and 18 are coupled to a hydraulic control unit (not illustrated) through a flexible tube.

Now, an interval between the lead cutting tool 10 and the lead outer surface cutting tool 11 in the generating line direction of the lower cylinder 3 is taken reasonably wide so as not to allow the tool 11 to interfere with the lower cylinder 3 at the time of lead cutting, and the tip of the lead cutting tool 10 is retreated from the outer surface on the lower cylinder 3 somewhat longer than the tip of the lead outer surface cutting tool 11 so as not to allow the lead cutting tool 10 to interfere with the outer surface of the lower cylinder 3 when an outer surface of the lower cylinder 3 is cut with the lead outer surface cutting tool 11.

The above is not necessarily to limit correlative positions for mounting both the tools 10 and 11, and various positions will be conceivable subject to being not interfering with each other.

The lower cylinder 3 held on the chuck 4 rotates in accordance as the main spindle 2 is driven to rotate, and the cam plate 5 also rotates concurrently, therefore the cutting tool support 8 shakes in reciprocation following the guide cam face 7 in the generating line direction of the lower cylinder 3 through the roller 9 energized onto the guide cam face 7, gives a feed corresponding to a cutting allowance in the direction orthogonal to the main spindle to the tool rest to have a lead outer surface of the lower cylinder cut in a helical curve by the lead outer surface cutting tool 11; at the same time a pressure oil is given through the tool feeding pressure oil supply/exhaust port 17 to move the piston 14 slowly in the direction of the cam face 7 and thus to feed the cutting tool mount 12 in the same direction, which gives a cutting feed in the generating line direction of the lower cylinder 3 to the lead outer surface cutting tool 11.

Therefore, the lead outer surface is cut and so formed on the outer surface of the lower cylinder 3.

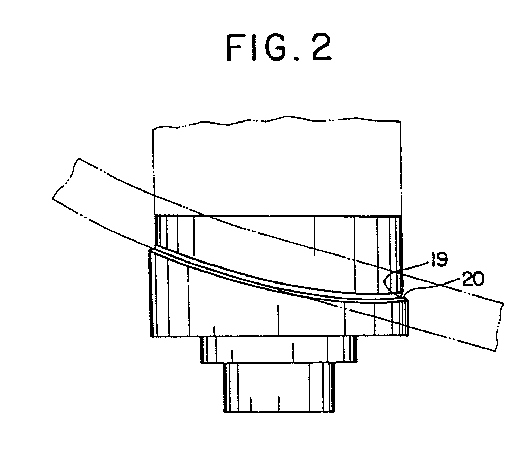

Next, the piston 14 is repushed by arranging the tool feeding pressure oil supply-exhaust port 17 to communicate with an oil tank and the tool return pressure oil supply/exhaust port 18 with an oil pressure source, the lead outer surface cutting tool 11 thus comes off the outer surface of the lower cylinder 3, the lead cutting tool 10 is set then on a lead cutting position, a feed in the direction orthogonal to the main spindle 2 is given to the tool rest, and thus an undercut 19 of the lead and the lead 20 are finished, as illustrated in Fig. 2, with the lead cutting tool 10.

A helical scan is cut and so formed on the lower cylinder for rotary head video tape player as described above; however, about 200 revolutions of the main spindle are necessary for completing a cutting of the lead outer surface, and also about 40 revolutions of the main spindle are necessary for completing a cut finish of the lead, which is generally well known. Namely, the guide cam face 7 is subjected to a rolling press action 200 times or so repeatedly by the cam roller 9 before cutting of the lead outer surface is completed, a wear loss on the guide cam face 7 due to the cam roller 9 cannot be neglected, exerting an influence most severely on the performance of a video tape player; however, a finishing of the lead 20 which requires a superhigh precision has been carried out hitherto on the basis of the guide cam face 7 which has already been worn out through cutting of the lead outer surface, and thus an unavoidable defect was that a superhigh precision finishing could never be realized. The more the cam plate 5 runs frequently before cutting of the lead outer surface is completed, the more the above defect comes to increase.

It is therefore the object of the present invention to provide a cutting machine which is compact, provides high accuracy of the working results and does not require special control means to prevent both cutting tools from being engagable with the workpiece at a time.

This object is attained by the features of claim 1. Further embodiments of the invention are subject-matter of the dependent claims.

By means of the present invention, all cam faces are located near the chuck and there is only one support for the tools so that said support is selectively engagable with all of said cam faces, thus providing a simple, compact mechanism for transmitting motion from the cam faces to the cutting tools. By proper positioning, the support in response to the selection of the cutting tools to be brought into contact with the workpiece, the support is automatically correctly positioned with respect to the respective cam face.

The invention will be better understood from the following description in conjunction with the accompanying drawings.

Fig. 1 is a schematic plan view, partly in section, of a main part of a conventional cutting machine as disclosed in JP—A—58-4341.

Fig. 2 is a front view of a lower cylinder for a rotary head video tape player.

Fig. 3 is a schematic plan view, partly in section, of a cutting machine according to an embodiment of this invention.

Fig. 4 is a flat pattern of a lead outer surface of the lower cylinder for a rotary head video tape player.

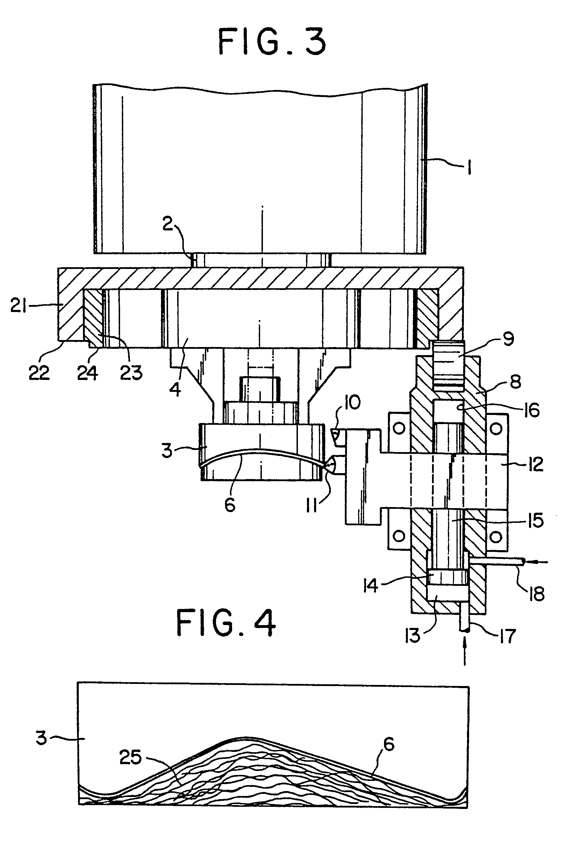

Fig. 3 represents an arrangement in which a lead cutting cam plate and one lead outer surface cutting cam plate are mounted, like reference numerals denoting like members in Fig. 1; a numeral 21 denotes a lead outer surface cutting cam plate having a lead outer surface guide cam face 22 fixed concentrically on the main spindle 2 therewith, and a numeral 23 denotes a lead cutting cam plate having a lead guide cam face 24 fixed concentrically on the main spindle 2, both guide cam faces 22, 24 forming a helical curve analogous to the helical scan 6.

Now, as mentioned hereinabove, from using the guide cam face 22 of the lead outer surface cutting cam plate 21 at the time of lead outer surface cutting which will be completed through a 200-time revolution and also from using the guide cam face 24 of the lead cutting cam plate 23 at the time of lead cutting for which a precision is required most severely, a wear on the cam face 24 can be minimized, and a finishing precision of the lead can be maintained exceedingly longer than ever before.

Further, an arrangement that a plurality of lead outer surface cutting cam plates are mounted concentrically with each guide cam face shaped differently and irregularly will not make cutting paths on the lead outer surface form a mirror surface, since they cross irregularly as shown in Fig. 4; therefore a magnetic tape guided to run on the lead outer surface being pressed does not stick to the lead outer surface and comes easily off, and thus the tape can be guided smoothly to function effectively.

Furthermore, the cam faces 22 and 24 of the lead cutting cam plate and the lead outer surface cutting cam plate are analogous each other and made to coincide in angled positions for use in the majority of cases; however, a cutting path of the lead outer surface and that of the lead due to a nonconformity of the centers between the lead cutting tool and the lead outer surface cutting tool can be made to coincide by adjusting a mutual angle phase of both the cam faces.

In the above embodiment, each cam plate is mounted concentrically, which is convenient for replacement at the time of wear on the cam face or change and selection of the cam face shape; however, it goes without saying that a plurality of concentrical cam faces can be formed on one cam plate when each cam plate need not be replaced separately.

Moreover, the lead cutting guide cam face can be disposed either on the innermost side or on the outermost side by selecting a relative position for mounting both the tools.

As described above, according to this invention, for cutting a helical scan in the outer surface of the lower cylinder, the lead cutting guide cam face for which the highest precision is required is used only at the time of lead cutting, the lead outer surface cutting guide cam face is formed separately from the lead cutting guide cam face, therefore a cutting precision of the lead is remarkably improved by suppressing a wear on the lead cutting guide cam face, a precision of guiding the tape for running is also improved, and thus an excellent effect can be secured to improve a video tape playing function.

**Claims**

1. A cutting machine for helical scan (6) of a lower cylinder for a rotary head video tape player, said machine comprising a chuck (4) for holding said lower cylinder mounted on an end of a main spindle (2) supported rotatably on a headstock on a bed, a first lead cutting cam plate (21) concentrically mounted on said main spindle, a second lead cutting cam plate (23) being rotatably mounted and driven in conjunction with said spindle, said cam plates each having a cutting guide cam face for a lead of a helical scan of the lower cylinder, a first cutting tool (10), and a second cutting tool (11) for selectively and successively cutting said lower cylinder, said first and second cutting tools being supported by cutting tool support means (12) being selectively and successively engagable with said first and second cam faces, respectively, to reciprocate in the direction of a generating line of said lower cylinder, characterized by said cam plates (21, 23) being concentrically mounted on the same end of the main spindle (2) as said chuck (4) for holding said lower cylinder (3), said cutting tool support means being a single support (8) and holding both cutting tools (10, 11) in different axially and radially spaced relationship with respect to the chuck (4) and being radially adjustable so as to selectively engage one of said cam faces (22, 24) of said cam plates (21, 23).

2. A cutting machine as set out in claim 1 wherein additional cam plates are arranged concentrically at the same end of said main spindle (2) as said chuck (4).

3. A cutting machine as set out in claim 1 or claim 2 wherein said cam plates are united in a single cam plate provided with all of said cam faces.

**Patentansprüche**

1. Werkzeugmaschine zum Bearbeiten auf schraubenförmiger Spur (6) eines unteren Zylinders für einen Videobandspieler mit rotierendem Kopf, wobei die Maschine enthält: ein Futter (4) zum Halten des unteren Zylinders, das an einem Ende einer drehbar in einem Spindelstock an einem Bett abgestützten Hauptspindel (2) montiert ist, eine erste Vorsprungsschneidnockenplatte (21), die konzentrisch an der Hauptspindel montiert ist, eine zweite Vorsprungsschneidnockenplatte (23), die im Zusammenwirken mit der Spindel drehbar montiert und angetrieben ist, wobei die Nockenplatten jeweils eine Schneidführungsnockenfläche für einen Vorsprung einer schraubenförmigen Spur des unteren Zylinders aufweisen, ein erstes Schneidwerkzeug (10) und ein zweites Schneidwerkzeug (11) zum wahlweisen und aufeinanderfolgenden Schneiden des unteren Zylinders, wobei die ersten und zweiten Schneidwerkzeuge von einem Schneidwerkzeugsupport (12) gehalten werden, der wahlweise und aufeinanderfolgend mit der ersten bzw. der zweiten Nockenfläche in Eingriff bringbar ist, um sich in der Richtung einer erzeugenden Linien des unteren Zylinders hin und her zu bewegen, dadurch gekennzeichnet, daß die Nockenplatten (21, 23) konzentrisch am selben Ende der Hauptspindel (2) wie das Futter (4) zum Halten des unteren Zylinders (3) montiert sind, daß der Schneidwerkzeugsupport ein einziger Support (8) ist und beide Schneidwerkzeuge (10, 11) in unterschiedlichem axialen und radialen Abstandverhältnis in bezug auf das Futter (4) hält und radial so einstellbar ist, daß er sich wahlweise an eine der Nockenfläche (22, 24) der Nockenplatten (21, 23) anlegt.

2. Werkzeugmaschine nach Anspruch 1, bei der weitere Nockenplatten konzentrisch am selben Ende der Hauptspindel (2) wie das Futter (4) angeordnet sind.

3. Werkzeugmaschine nach Anspruch 1 oder 2, bei der die Nockenplatten in einer einzigen Nockenplatte vereinigt sind, die alle der genannten Nockenflächen aufweist.

**Revendications**

1. Une machine d'usinage à voie hélicoïdale (6) d'un cylindre inférieur pour un magnétoscope à tête rotative, ladite machine comprenant un mandrin (4) pour maintenir ledit cylindre inférieur monté sur une extrémité d'une broche principale (2) supportée de façon tournante sur une poupée placée sur un banc, une première plaque de came d'usinage de guide (21) montée concentriquement sur ladite broche principale, une seconde plaque de came d'usinage de guide (23) étant montée de façon tournante et entraînée en coopération avec ladite broche, lesdites plaques de cames comportant chacune une face de came de guidage d'usinage pour un guide à voie hélicoïdale du cylindre inférieur, un premier outil de coupe (10) et un second outil de coupe (11) pour usiner sélectivement et successivement ledit cylindre inférieur, lesdits premier et second outils de coupe étant supportés par un moyen de support d'outils de coupe (12) de façon à être amenés sélectivement et successivement en contact avec lesdits première et seconde faces de cames, respectivement, pour se déplacer alternativement dans la direction d'une génératrice dudit cylindre inférieur, caractérisée en ce que lesdites plaques de cames (21, 23) sont montées concentriquement sur la même extrémité de la broche principale (2) que ledit mandrin (4) de maintien du cylindre inférieur (3), ledit moyen de support d'outils de coupe étant constitué par un seul support (8) et maintenant les deux outils de coupe (10, 11) dans différentes relations d'espacement axial et radial par rapport au mandrin (4) et étant réglable radialement de façon à entrer sélectivement en contact avec une desdites faces de cames (22, 24) desdites plaques de cames (21, 23).

2. Une machine de coupe selon la revendication 1, caractérisée en ce que des plaques de cames additionnelles sont disposées concentriquement à la même extrémité de ladite broche principale (2) qui ledit mandrin (4).

3. Une machine de coupe selon la revendication 1 ou la revendication 2, dans laquelle lesdites plaques de cames sont réunies sous la forme d'une seule plaque de came pourvue de toutes les faces de cames précitées.

# FIG. I

# FIG. 2

# FIG. 3

# FIG. 4